# FASCICULE DE BREVET EUROPEEN

(11) **EP 2 815 151 B1**
(45) Date de publication et mention de la délivrance du brevet: **20.04.2016**
(21) Numéro de dépôt: 13703068.0
(22) Date de dépôt: 07.02.2013
(51) Int. Cl.: E05F 5/06, E05F 5/02, F16F 1/373

(54) **BUTEE D'AMORTISSEMENT POUR ARTICULATION, NOTAMMENT POUR ARTICULATION DE PORTE DE VEHICULE**
DÄMPFUNGSANSCHLAG FÜR EIN SCHARNIER, INSBESONDERE FÜR EIN SCHARNIER EINER FAHRZEUGTÜR
DAMPING STOP FOR A HINGE, IN PARTICULAR FOR A HINGE FOR THE DOOR OF A VEHICLE

(30) Priorité: 17.02.2012 FR 1251464
(43) Date de publication de la demande: 24.12.2014
(73) Titulaire: Renault S.A.S., 92100 Boulogne-Billancourt (FR)
(72) Inventeur: CHAUFFOUR, Olivier, F-94700 Maisons Alfort (FR); TOMAS, Fabrice, F-75014 Paris (FR); GITTON, Alain, F-91290 Arpajon (FR)
(86) Numéro de dépôt international: PCT/EP2013/052462
(87) Numéro de publication internationale: WO 2013/120763

(56) Documents cités:
- EP-A2- 0 098 063
- WO-A1-00/37758
- DE-A1- 4 301 099
- US-A- 4 787 121
- US-A- 4 914 781

## Description

L'invention concerne une butée d'amortissement pour articulation, notamment pour articulation de porte de véhicule. L'invention concerne également l'utilisation de cette butée d'amortissement pour amortir le pivotement de deux pièces, et un véhicule comprenant une telle butée d'amortissement.

Dans certains véhicules, on peut observer des rebonds en fin d'ouverture d'un ouvrant, ce qui peut provoquer une fatigue et une usure prématurée des pièces formant l'articulation de l'ouvrant.

Il existe des dispositifs d'amortissement de l'ouverture d'un ouvrant, en particulier d'ouvrants de véhicules, comme décrits notamment dans les documents WO 00/37758 et DE 43 01 099, mais ils sont généralement complexes à réaliser et à monter.

L'invention vise à pallier ces inconvénients en proposant une butée d'amortissement qui soit simple à réaliser et à monter.

A cet effet, l'objet de l'invention concerne une butée d'amortissement pour l'amortissement de la rotation de deux pièces reliées par un axe d'articulation, caractérisée en ce qu'elle est formée d'un bloc de matière élastomère et en ce qu'elle comprend :
- une zone de fixation conformée pour être insérée en force dans un logement situé entre la première pièce et l'axe d'articulation,
- une zone de contact conformée pour entrer en contact avec la deuxième pièce après pivotement de celle-ci autour de l'axe d'articulation en direction de la première pièce,
- une zone de compression formée d'un vide de matière à l'intérieur du bloc de matière élastomère, ce vide de matière s'étendant sur toute la longueur de la butée d'amortissement suivant une direction parallèle à l'axe d'articulation lorsque la butée d'amortissement est insérée dans ledit logement, la zone de compression comprenant une partie mâle et une partie femelle correspondante conformées de manière à ce que la partie mâle s'engage avec frottement à l'intérieur de la partie femelle lorsque la deuxième pièce pivote en direction de la première pièce et comprime la butée d'amortissement.

Une telle butée présente l'avantage de pouvoir être réalisée de manière très simple en une seule matière et ne nécessite aucun outil pour sa fixation : elle peut ainsi être réalisée et montée facilement et rapidement.

Par ailleurs, cet agencement permet d'absorber par frottement davantage d'énergie et contribue à ralentir et contrôler le mouvement de pivotement de la deuxième pièce par rapport à la première. Il est ainsi possible de réduire, voire supprimer, les rebonds de la deuxième pièce par rapport à la première, en particulier en fin de rotation de la deuxième pièce. En outre, cet agencement permet d'augmenter la durée de vie de la butée d'amortissement, moins sollicitée en compression.

Par exemple, l'insertion en force de la butée peut être obtenue de manière simple en réalisant la zone de fixation avec une forme complémentaire de la forme dudit logement mais des dimensions supérieures à celles du logement, ces dimensions étant choisies de manière à permettre l'insertion en force de la zone de fixation à l'intérieur du logement et son maintien à l'intérieur de ce dernier.

La zone de compression permet d'amortir le mouvement de pivotement des deux pièces par compression du vide interne de la butée.

Avantageusement et de manière non limitative, la zone de fixation comprend une rainure conformée pour recevoir l'axe d'articulation lorsque la butée est insérée dans ledit logement. Ceci peut permettre d'améliorer le maintien de la butée à l'intérieur du logement.

Avantageusement et de manière non limitative, la zone de contact présente une forme arrondie convexe. Ceci peut permettre de faciliter la répartition de la force appliquée par la deuxième pièce sur la zone de contact lors du pivotement de la deuxième pièce vers la première pièce et d'obtenir ainsi une compression plus homogène de la butée.

Avantageusement et de manière non limitative, les parties mâle et femelle présentent une forme allongée arrondie dont la courbure, dans un plan perpendiculaire à l'axe d'articulation, correspond à la courbure d'un cercle centré sur l'axe d'articulation, lesdites parties mâle et femelle étant positionnées sur ce cercle. Cette configuration permet de faciliter l'insertion de la partie mâle à l'intérieur de la partie femelle, en particulier lorsque la butée d'amortissement est déjà en partie déformée du fait du pivotement de la deuxième pièce vers la première pièce.

Cette partie mâle est par exemple solidaire d'une partie de matière formant la butée d'amortissement située entre la zone de compression et la zone de contact.

Avantageusement et de manière non limitative, la zone de compression comprend deux surfaces d'arrêt positionnées et conformées pour venir en contact l'une contre l'autre et limiter la compression de la butée d'amortissement lorsque la deuxième pièce a pivoté d'un angle prédéterminé en direction de la première pièce. Ainsi, lorsque ces surfaces d'arrêt sont en contact, la butée d'amortissement ne peut pas être davantage comprimée : la deuxième pièce ne peut alors pas pivoter davantage en direction de la première pièce. Ces surfaces d'arrêt déterminent donc la compression maximale autorisée de la butée d'amortissement et la rotation maximale de la deuxième pièce par rapport à la première pièce. Ces surfaces d'arrêt sont généralement des surfaces planes.

L'invention concerne également l'utilisation d'une butée d'amortissement selon l'invention, pour amortir le pivotement relatif de deux pièces reliées par un axe d'articulation, notamment deux pièces d'un véhicule automobile, la butée d'amortissement étant insérée entre une première des pièces et l'axe d'articulation, pour amortir le pivotement de la deuxième des pièces en direction de la première pièce.

Par exemple, la première pièce peut être un (ou faire partie d'un) élément de structure d'un véhicule supportant un axe d'articulation, et la deuxième pièce peut être un (ou faire partie d'un) ouvrant du véhicule articulé à la première pièce au moyen de l'axe d'articulation.

Une telle utilisation est particulièrement avantageuse pour les véhicules automobiles comportant une structure légère, par exemple les véhicules à motorisation électrique, en particulier de petite taille. La butée d'amortissement selon l'invention permet en effet d'amortir l'ouverture de l'ouvrant de manière simple, sans augmenter le poids du véhicule et sans avoir à modifier l'articulation.

Ainsi, l'invention concerne aussi un véhicule automobile, notamment un véhicule électrique, présentant au moins une ouverture sur un côté permettant l'entrée et la sortie des occupants, cette ouverture pouvant être obturée, en tout ou partie, par un ouvrant relié à la structure du véhicule par un axe d'articulation, caractérisé en ce qu'il comprend au moins une butée d'amortissement selon l'invention positionnée entre la structure et l'axe d'articulation pour amortir le pivotement de chaque ouvrant en direction de la structure.

Dans ce type de véhicule, l'ouvrant, qui peut être un simple dispositif de protection latéral, peut être relié à la structure du véhicule par une unique articulation.

En particulier, l'axe d'articulation du ou des ouvrants peut s'étendre suivant une direction transversale au véhicule, permettant alors une ouverture « en élytre » de l'ouvrant. L'utilisation d'une butée d'amortissement selon l'invention est alors particulièrement avantageuse, la fin d'ouverture de l'ouvrant correspondant souvent dans une position dans laquelle l'ouvrant à tendance à basculer avec une augmentation de vitesse sous l'effet de la gravité.

La butée d'amortissement selon l'invention permet un contrôle de la vitesse de pivotement et l'arrêt du pivotement en douceur en fin d'une ouverture en élytre.

L'invention est maintenant décrite en référence aux dessins annexés, non limitatifs, dans lesquels :
- les figures 1 et 2 sont des vues en perspective de l'avant, respectivement de l'arrière, d'une butée d'amortissement selon l'invention ;
- la figure 3 est une vue de côté de la butée d'amortissement représentée sur les figures 1 et 2 ;
- la figure 4 est une vue en perspective d'une articulation équipée de la butée d'amortissement représentée sur les figures 1 à 3, la butée d'amortissement étant dans un état non comprimé ;
- la figure 5 est une vue similaire à la celle de la figure 4, la butée d'amortissement étant dans un état comprimé.

Dans la présente description, les termes avant, arrière, supérieur, inférieur, font référence aux directions avant et arrière du véhicule, lorsque la butée d'amortissement est monté sur un véhicule. Les axes X, Y, Z, correspondent respectivement à l'axe longitudinal (d'avant en arrière), transversal et vertical du véhicule.

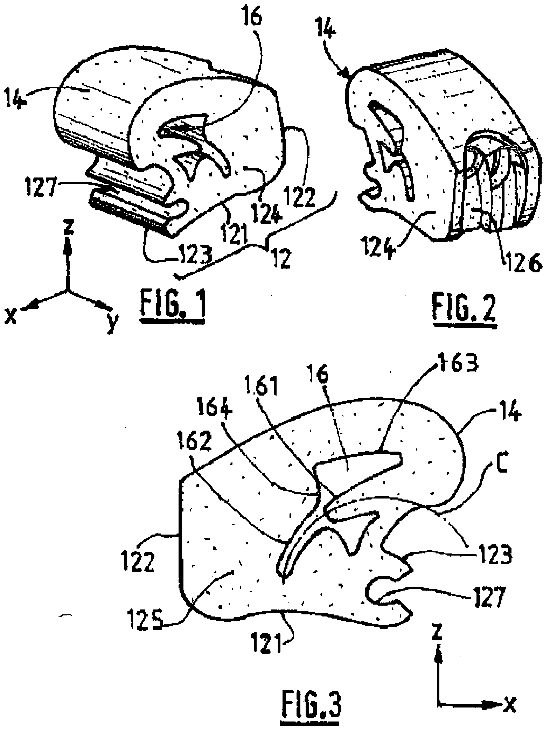

Les figures 1 à 3 représentent une butée d'amortissement 10 pour l'amortissement de la rotation de deux pièces reliées par un axe d'articulation.

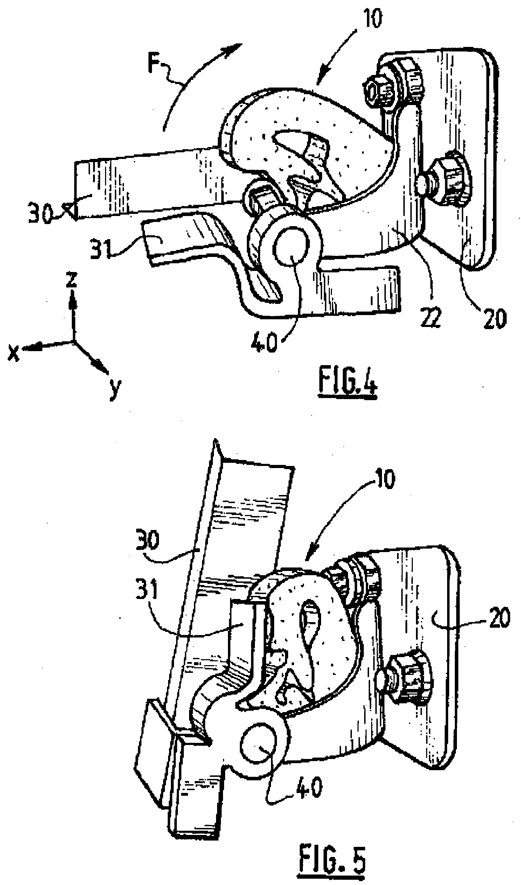

Ces pièces sont représentées sur les figures 4 et 5. Une première pièce 20 fait partie d'un élément de structure d'un véhicule. La deuxième pièce 30 fait partie d'un ouvrant. Ces première et deuxième pièces 20, 30 sont reliées par un axe d'articulation 40. Cet axe d'articulation 40 est supporté par la première pièce 20 au moyen d'un support 22 solidaire de la pièce 20. Un espace existe ainsi entre la première pièce 20 et l'axe d'articulation 40, cet espace pouvant former un logement pour la butée d'amortissement 10 selon l'invention. L'axe d'articulation 40 peut s'étendre suivant une direction transversale au véhicule, permettant alors une ouverture « en élytre » de l'ouvrant.

Cette butée d'amortissement 10 est formée d'un bloc de matière élastomère. La matière élastomère peut par exemple être de l'EPDM ou toute autre matière élastomère.

La butée d'amortissement 10 comprend :
- une zone de fixation 12 conformée pour être insérée en force dans un logement situé entre la première pièce 20 et l'axe d'articulation 40,
- une zone de contact 14 conformée pour entrer en contact avec la deuxième pièce 30 après pivotement de celle-ci autour de l'axe d'articulation 40 en direction de la première pièce 20 (figure 5),
- une zone de compression 16 formée d'un vide de matière à l'intérieur du bloc de matière élastomère, ce vide de matière s'étendant sur toute la longueur de la butée d'amortissement 10 suivant une direction parallèle à l'axe d'articulation 40 lorsque la butée d'amortissement 10 est insérée dans le logement.

La zone de fixation 12 présente une forme complémentaire de la forme du logement mais ses dimensions sont supérieures à celles du logement, ces dimensions étant choisies de manière à permettre l'insertion en force de la zone de fixation à l'intérieur du logement et son maintien à l'intérieur de ce logement.

Dans l'exemple représenté, la zone de fixation 12 comprend trois faces 121, 122, 123 de la butée d'amortissement 10 adjacentes deux à deux, et deux faces opposées 124, 125. Une première face 121 forme une face inférieure de la butée d'amortissement 10, une deuxième face 122 forme une face latérale et une troisième face 123 forme la partie inférieure d'une face latérale opposée à la face latérale 122. Les autres faces 124, 125 forment les parties inférieures de deux autres côtés de la butée d'amortissement 10. Ces différentes faces 121-125 sont destinées à être en contact avec les parois du logement recevant la butée d'amortissement 10. Leurs formes peuvent donc varier en fonction de la forme du logement.

Dans l'exemple représenté, la face inférieure 121 est sensiblement courbe et la face latérale 122 comprend une empreinte 126 de forme complémentaire d'une partie du logement. La troisième face 123 comporte une rainure 127 conformée pour recevoir l'axe d'articulation 40 lorsque la butée d'amortissement 10 est insérée dans le logement entre les deux pièces 20 et 30 articulées. La rainure 127 s'étend ainsi parallèlement à l'axe d'articulation 40 lorsque la butée d'amortissement 10 est insérée dans le logement. La rainure 127 peut présenter une forme sensiblement complémentaire de la forme de l'axe d'articulation 40 et peut présenter une ouverture d'une dimension telle que l'axe d'articulation 40 est maintenu à l'intérieur de la rainure 127, tel que visible sur la figure 3. La butée d'amortissement 10 peut alors être clippée sur l'axe d'articulation 40, par coopération de la rainure 127 et de l'axe d'articulation 40. Par ailleurs, la distance entre la face 122 et la rainure 127 participe à maintenir la butée 10 en place sur la pièce 22 et sur l'axe d'articulation 40.

La zone de contact 14 est une surface externe de la butée d'amortissement 10 qui est la surface contre laquelle la deuxième pièce 30 va entrer en contact et exercer une pression lors du pivotement de la deuxième pièce 30 vers la première pièce 20. Cette zone de contact 14 peut présenter une forme arrondie convexe.

Dans l'exemple représenté, la zone de contact 14 présente une forme arrondie dans un plan transversal à l'axe d'articulation 40 lorsque la butée d'amortissement 10 est insérée dans son logement (figure 3). Ceci permet de faciliter la réalisation de la butée d'amortissement 10.

La zone de compression 16 de l'exemple représenté comprend une partie mâle 161 et une partie femelle 162 correspondante conformées de manière à ce que la partie mâle 161 s'engage avec frottement à l'intérieur de la partie femelle 162 lorsque la deuxième pièce 30 pivote en direction de la première pièce 20 et comprime la butée d'amortissement 10. Ce frottement permet d'absorber l'énergie induite par le mouvement de la pièce 30 et contribue à ralentir celle-ci. Ainsi, les dimensions de la partie mâle 161 sont supérieures aux dimensions de la partie femelle 162 afin que la partie mâle 161 puisse pénétrer avec frottement à l'intérieur de la partie femelle 162. Dans l'exemple, la partie mâle 161 se présente sous la forme d'une bande saillante de matière de forme allongée arrondie, dont la courbure, dans un plan perpendiculaire à l'axe d'articulation 40, correspond à la courbure d'un cercle centré sur l'axe d'articulation 40. De manière correspondante, la partie femelle 162 se présente sous la forme d'une rainure de forme allongée arrondie, de même courbure que la partie mâle 161 dans un plan perpendiculaire à l'axe d'articulation 40. Les parties mâle 161 et femelle 162 sont ainsi situées en regard l'une de l'autre dans la zone de compression 16 et sont disposées sur un même cercle C centré sur l'axe d'articulation 40 (figure 3).

La partie mâle 161 est en outre solidaire d'une partie de matière formant la butée d'amortissement 10 située entre la zone de fixation 12 et la zone de contact 14, tel que visible sur les figures 1 et 3. Ainsi, lorsque la deuxième pièce 30 entre en contact avec la zone de contact 14 et commence à déformer cette dernière, la partie mâle 161 est déplacée simultanément en direction de la partie femelle 162.

De manière générale, et tel que représenté dans l'exemple, les parties mâle 161 et femelle 162 s'étendent sur toute la longueur de la butée d'amortissement 10 suivant une direction parallèle à l'axe d'articulation 40 lorsque la butée d'amortissement 10 est insérée dans son logement (direction parallèle à l'axe Y sur les figures). Cette configuration permet de simplifier la réalisation de la butée d'amortissement 10. On peut toutefois envisager des configurations plus complexes, dans lesquelles une ou plusieurs parties mâles et femelles sont prévues réparties le long de cette longueur.

La zone de compression 16 comprend également deux surfaces d'arrêt 163 et 164 positionnées et conformées pour venir en contact l'une contre l'autre et limiter la compression de la butée d'amortissement 10. Ces surfaces d'arrêt 163, 164 sont généralement des surfaces planes, tel que représenté sur les figures. Leur positionnement dans la zone de compression 16 dépendra ainsi de la compression maximale de la butée d'amortissement 10 souhaitée, et donc du déplacement maximal autorisé de la deuxième pièce 30 en direction de la première pièce 20. Lorsque les première et deuxième pièces 20, 30 font partie respectivement d'un élément de structure d'un véhicule et d'un ouvrant, la configuration de ces surfaces d'arrêt 163, 164 permet de déterminer l'angle d'ouverture maximal de l'ouvrant par rapport à l'élément de structure.

Les figures 4 et 5 illustrent le comportement de la butée d'amortissement 10 décrite ci-dessus lors du pivotement relatif des première et deuxième pièces 20, 30.

La figure 4 représente un état dans lequel la butée d'amortissement 10 n'est pas comprimée, correspondant dans l'exemple à une position fermée d'un ouvrant dont fait partie la deuxième pièce 30. La butée d'amortissement 10 est alors insérée dans le logement situé entre la première pièce 20 et l'axe d'articulation 40, de sorte que sa zone de fixation 12 est peu visible. L'axe d'articulation 40 est dans cette position inséré dans la rainure 127 de la butée d'amortissement 10. Lors de l'ouverture de l'ouvrant, la deuxième pièce 30 est pivotée autour de l'axe d'articulation 40 en direction de la première pièce 20, dans le sens de la flèche F représentée sur la figure 4. Une partie 31 de la deuxième pièce 30 entre alors en contact avec la surface de contact 14 de la butée d'amortissement 10 et commence à comprimer cette dernière. En cours de cette compression de la zone de compression 16, la partie mâle 161 se déplace en suivant le cercle C et pénètre avec frottement dans la partie femelle 162, jusqu'à ce que les surfaces d'arrêt 163, 164 soient en contact, tel que représenté sur la figure 5, bloquant ainsi le pivotement de la deuxième pièce 30. Le frottement des parties mâle 161 et femelle 162 permet de ralentir le pivotement de la deuxième pièce 30 par rapport à la première pièce 20, tandis que le contact des surfaces d'arrêt 163, 164 arrête complètement ce pivotement. Un mouvement sans rebonds de la deuxième pièce 30 peut ainsi être obtenu.

## Revendications

1. Butée d'amortissement (10) pour l'amortissement de la rotation de deux pièces (20, 30) reliées par un axe d'articulation (40), **caractérisée en ce qu'**elle est formée d'un bloc de matière élastomère et **en ce qu'**elle comprend :
- une zone de fixation (12) conformée pour être insérée en force dans un logement situé entre la première pièce (20) et l'axe d'articulation (40),
- une zone de contact (14) conformée pour entrer en contact avec la deuxième pièce (30) après pivotement de celle-ci autour de l'axe d'articulation (40) en direction de la première pièce (20),
- une zone de compression (16) formée d'un vide de matière à l'intérieur du bloc de matière élastomère, ce vide de matière s'étendant sur toute la longueur de la butée d'amortissement (10) suivant une direction parallèle à l'axe d'articulation (40) lorsque la butée d'amortissement (10) est insérée dans ledit logement, la zone de compression (16) comprenant une partie mâle (161) et une partie femelle (162) correspondante conformées de manière à ce que la partie mâle (161) s'engage avec frottement à l'intérieur de la partie femelle (162) lorsque la deuxième pièce (30) pivote en direction de la première pièce (20) et comprime la butée d'amortissement (10).

2. Butée d'amortissement (10) selon la revendication 1, **caractérisée en ce que** la zone de fixation (12) comprend une rainure (127) conformée pour recevoir l'axe d'articulation (40) lorsque la butée d'amortissement (10) est insérée dans ledit logement.

3. Butée d'amortissement (10) selon l'une des revendications 1 ou 2, **caractérisée en ce que** la zone de contact (14) présente une forme arrondie convexe.

4. Butée d'amortissement selon l'une des revendications 1 à 3, **caractérisée en ce que** les parties mâle (161) et femelle (162) ont une forme allongée arrondie dont la courbure, dans un plan perpendiculaire à l'axe d'articulation (40), correspond à la courbure d'un cercle (C) centré sur l'axe d'articulation (40), lesdites parties mâle (161) et femelle (162) étant positionnées sur ce cercle (C).

5. Butée d'amortissement (10) selon l'une des revendications 1 à 4, **caractérisée en ce que** la zone de compression (16) comprend deux surfaces d'arrêt (163, 164) positionnées et conformées pour venir en contact l'une contre l'autre et limiter la compression de la butée d'amortissement (10) lorsque la deuxième pièce (30) a pivoté d'un angle prédéterminé en direction de la première pièce (20).

6. Utilisation d'une butée d'amortissement (10) selon l'une des revendications 1 à 5, pour amortir le pivotement relatif de deux pièces (20, 30) reliées par un axe d'articulation (40), la butée d'amortissement (10) étant insérée entre une première (20) des pièces et l'axe d'articulation (40), pour amortir le pivotement de la deuxième (30) des pièces en direction de la première pièce (20).

7. Utilisation selon la revendication 6, dans laquelle la première pièce est un élément de structure d'un véhicule supportant un axe d'articulation, et la deuxième pièce est un ouvrant du véhicule articulé à la première pièce au moyen de l'axe d'articulation.

8. Véhicule automobile, notamment véhicule électrique, présentant au moins une ouverture sur un côté permettant l'entrée et la sortie des occupants, cette ouverture pouvant être obturée, en tout ou partie, par un ouvrant (30) relié à la structure (20) du véhicule par un axe d'articulation, **caractérisé en ce qu'**il comprend au moins une butée d'amortissement (10) selon l'une des revendications 1 à 5 positionnée entre la structure (20) et l'axe d'articulation (40) pour amortir le pivotement de chaque ouvrant (30) en direction de la structure (20).

9. Véhicule automobile selon la revendication 8, dans lequel l'axe d'articulation (40) du ou des ouvrants s'étend suivant une direction transversale au véhicule.

## Patentansprüche

1. Dämpfungsanschlag (10) zur Dämpfung der Drehung von zwei Teilen (20, 30), die über eine Gelenkachse (40) verbunden sind, **dadurch gekennzeichnet, dass** er aus einem Block aus elastomerem Material gebildet ist und dass er Folgendes umfasst:
- einen Befestigungsbereich (12), der dazu ausgebildet ist, in eine zwischen dem ersten Teil (20) und der Gelenkachse (40) angeordnete Aufnahme eingezwungen zu werden,
- einen Kontaktbereich (14), der dazu ausgebildet ist, mit dem zweiten Teil (30) nach dessen Schwenken um die Gelenkachse (40) in Richtung des ersten Teils (20) in Kontakt zu treten,
- einen Kompressionsbereich (16), der aus Materialhohlraum im Innern des Blocks aus elastomerem Material gebildet ist, wobei sich dieser Materialhohlraum in einer parallel zu der Gelenkachse (40) verlaufenden Richtung über die gesamte Länge des Dämpfungsanschlags (10) erstreckt, wenn der Dämpfungsanschlag (10) in der Aufnahme eingeführt ist, wobei der Kompressionsbereich (16) einen männlichen Teil (161) und einen entsprechenden weiblichen Teil (162) umfasst, die so ausgebildet sind, dass der männliche Teil (161) mit dem Innern des weiblichen Teils (162) in Reibeingriff tritt, wenn der zweite Teil (30) in Richtung des ersten Teils (20) schwenkt und den Dämpfungsanschlag (10) komprimiert.

2. Dämpfungsanschlag (10) nach Anspruch 1, **dadurch gekennzeichnet, dass** der Befestigungsbereich (12) eine Rille (127) umfasst, die dazu ausgebildet ist, die Gelenkachse (40) aufzunehmen, wenn der Dämpfungsanschlag (10) in der Aufnahme eingeführt ist.

3. Dämpfungsanschlag (10) nach einem der Ansprüche 1 oder 2, **dadurch gekennzeichnet, dass** der Kontaktbereich (14) eine konvexe abgerundete Form aufweist.

4. Dämpfungsanschlag (10) nach einem der Ansprüche 1 bis 3, **dadurch gekennzeichnet, dass** der männliche (161) und der weibliche Teil (162) eine abgerundete längliche Form haben, deren Krümmung in einer senkrecht zur Gelenkachse (40) verlaufenden Ebene der Krümmung eines auf die Gelenkachse (40) zentrierten Kreises (C) entspricht, wobei der männliche (161) und der weibliche Teil (162) auf diesem Kreis (C) positioniert sind.

5. Dämpfungsanschlag (10) nach einem der Ansprüche 1 bis 4, **dadurch gekennzeichnet, dass** der Kompressionsbereich (16) zwei Arretierungsflächen (163, 164) umfasst, die so positioniert und ausgebildet sind, dass sie miteinander in Kontakt kommen und die Komprimierung des Dämpfungsanschlags (10) begrenzen, wenn der zweite Teil (30) in einem vorbestimmten Winkel in Richtung des ersten Teils (20) geschwenkt ist.

6. Verwendung eines Dämpfungsanschlags (10) nach einem der Ansprüche 1 bis 5 zur Dämpfung des relativen Schwenkens von zwei durch eine Gelenkachse (40) verbundenen Teilen (20, 30), wobei der Dämpfungsanschlag (10) zwischen einem ersten (20) der Teile und der Gelenkachse (40) eingeführt ist, um das Schwenken des zweiten (30) der Teile in Richtung des ersten Teils (20) zu dämpfen.

7. Verwendung nach Anspruch 6, wobei der erste Teil ein Strukturelement eines Fahrzeugs ist, das eine Gelenkachse stützt, und der zweite Teil ein Öffnungsteil des Fahrzeugs ist, das mittels der Gelenkachse an dem ersten Teil angelenkt ist.

8. Kraftfahrzeug, insbesondere Elektrofahrzeug, das mindestens eine Öffnung an einer Seite aufweist, die das Einsteigen und das Aussteigen der Insassen gestattet, wobei diese Öffnung ganz oder teilweise durch ein Öffnungsteil (30) verschlossen werden kann, das über eine Gelenkachse mit der Struktur (20) des Fahrzeugs verbunden ist, **dadurch gekennzeichnet, dass** es mindestens einen Dämpfungsanschlag (10) nach einem der Ansprüche 1 bis 5 umfasst, der zwischen der Struktur (20) und der Gelenkachse (40) positioniert ist, um das Schwenken jedes Öffnungsteils (30) in Richtung der Struktur (20) zu dämpfen.

9. Kraftfahrzeug nach Anspruch 8, wobei sich die Gelenkachse (40) des oder der Öffnungsteile gemäß einer quer zum Fahrzeug verlaufenden Richtung erstreckt.

## Claims

1. Damping stop (10) for damping the rotation of two components (20, 30) that are connected by a hinge pin (40), **characterized in that** it is formed from a block of elastomeric material, and **in that** it comprises:
- an attachment zone (12) that is shaped so as to be forcibly inserted into a housing located between the first component (20) and the hinge pin (40),
- a contact zone (14) that is shaped so as to come into contact with the second component (30) after the latter has pivoted about the hinge pin (40) in the direction of the first component (20),
- a compression zone (16) formed by a void in the material inside the block of elastomeric material, this void in the material extending along the entire length of the damping stop (10) in a direction parallel to the hinge pin (40) when the damping stop (10) is inserted into said housing, the compression zone (16) comprising a male part (161) and a corresponding female part (162) that are shaped such that the male part (161) engages with friction inside the female part (162) when the second component (30) pivots in the direction of the first component (20) and compresses the damping stop (10).

2. Damping stop (10) according to Claim 1, **characterized in that** the attachment zone (12) comprises a groove (127) that is shaped so as to receive the hinge pin (40) when the damping stop (10) is inserted into said housing.

3. Damping stop (10) according to either of Claims 1 and 2, **characterized in that** the contact zone (14) has a convex rounded shape.

4. Damping stop according to one of Claims 1 to 3, **characterized in that** the male part (161) and female part (162) have a rounded elongate shape, the curvature of which, in a plane perpendicular to the hinge pin (40), corresponds to the curvature of a circle (C) centred on the hinge pin (40), said male part (161) and female part (162) being positioned on this circle (C).

5. Damping stop (10) according to one of Claims 1 to 4, **characterized in that** the compression zone (16) comprises two stop surfaces (163, 164) that are positioned and shaped so as to come into contact with one another and to limit the compression of the damping stop (10) when the second component (30) has pivoted through a predetermined angle in the direction of the first component (20).

6. Use of a damping stop (10) according to one of Claims 1 to 5 for damping the relative pivoting of two components (20, 30) that are connected by a hinge pin (40), the damping stop (10) being inserted between a first (20) of the components and the hinge pin (40) in order to damp the pivoting of the second (30) of the components in the direction of the first component (20).

7. Use according to Claim 6, wherein the first component is a structural element of a vehicle that carries a hinge pin, and the second component is a door of the vehicle that is hinged to the first component by means of the hinge pin.

8. Motor vehicle, in particular an electric vehicle, having at least one opening on one side allowing occupants to enter and exit, this opening being able to be closed, entirely or partially, by a door (30) that is connected to the structure (20) of the vehicle by a hinge pin, **characterized in that** it comprises at least one damping stop (10) according to one of Claims 1 to 5, said damping stop (10) being positioned between the structure (20) and the hinge pin (40) in order to damp the pivoting of each door (30) in the direction of the structure (20).

9. Motor vehicle according to Claim 8, wherein the hinge pin (40) of the door(s) extends in a transverse direction with respect to the vehicle.
